# FASCICULE DE BREVET EUROPEEN

(11) **EP 2 347 330 B1**
(45) Date de publication et mention de la délivrance du brevet: **08.04.2015**
(21) Numéro de dépôt: 09755947.0
(22) Date de dépôt: 01.10.2009
(51) Int. Cl.: G06F 3/147, G07F 19/00

(54) **TERMINAL DE PAIEMENT ELECTRONIQUE A AFFICHAGE AMELIORE**
ATM SELBSTBEDIENUNGSAUTOMAT MIT EINER VERBESSERTEN DISPLAY-EINRICHTUNG
ATM BANKING ELECTRONIC TERMINAL WITH IMPROVED DISPLAY

(30) Priorité: 01.10.2008 FR 0856634
(43) Date de publication de la demande: 27.07.2011
(73) Titulaire: Compagnie Industrielle et Financière d'Ingénierie "Ingenico", 75015 Paris (FR)
(72) Inventeur: LACROIX, Pierre, F-07130 Saint Peray (FR)
(74) Mandataire: Thibon, Laurent
(86) Numéro de dépôt international: PCT/FR2009/051869
(87) Numéro de publication internationale: WO 2010/037978

(56) Documents cités:
- EP-A- 1 672 461
- WO-A-95/19595

## Description

### Domaine de l'invention

La présente invention concerne les terminaux de paiement électronique, et en particulier les terminaux de paiement électronique munis d'un écran d'affichage.

### Exposé de l'art antérieur

Un terminal de paiement électronique comprend généralement un boîtier contenant un circuit imprimé auquel sont reliés divers composants, notamment un clavier, un lecteur de carte à puce, un lecteur de carte magnétique, un écran d'affichage, par exemple un afficheur à cristaux liquides ou afficheur LCD (de l'anglais Liquid Crystal Display), etc.

Un processeur, fixé au circuit imprimé, permet la réalisation d'une opération de paiement électronique. Il commande notamment l'échange de données avec la puce d'une carte à puce introduite dans le lecteur de carte, l'affichage de données sur l'écran d'affichage, etc. En raison des contraintes de sécurité imposées par les organismes bancaires pour la réalisation d'opérations de paiement électronique, le processeur met généralement en oeuvre des algorithmes de chiffrage lors de l'échange de données avec la carte à puce. Un tel processeur est généralement appelé processeur de sécurité ou cryptoprocesseur.

De par son fonctionnement, le processeur de sécurité n'est pas adapté à transmettre des données à l'écran d'affichage à un débit élevé. De ce fait, les images affichées sur l'écran d'affichage d'un terminal de paiement électronique sont, de façon générale, limitées à de simples messages (en anglais prompts), correspondant, par exemple, à des suites de caractères alphanumériques. A titre d'exemple, au cours d'une opération de paiement, le processeur de sécurité peut commander l'affichage sur l'écran d'affichage du montant de la transaction financière puis l'affichage d'un message tel que "saisir code" ou "code ?". L'utilisateur introduit alors un code confidentiel par l'intermédiaire du clavier du terminal de paiement électronique, le code confidentiel étant stocké au niveau d'une mémoire du processeur de sécurité. La plupart du temps, l'écran d'affichage du terminal de paiement électronique reste inutilisé ou est seulement utilisé pour l'affichage d'une image fixe.

La conception du processeur de sécurité est une opération complexe étant donné les nombreuses contraintes de sécurité imposées pour les opérations de paiement électronique que le processeur de sécurité doit satisfaire. Il est donc, en pratique, peu envisageable de modifier le processeur de sécurité pour qu'il transmette des données à l'afficheur à un débit plus élevé.

### Résumé

La présente invention vise à obtenir un terminal de paiement électronique permettant l'affichage d'images à un débit élevé sur un écran d'affichage tout en restant compatible avec les contraintes de sécurité propres au domaine des opérations de paiement électronique.

Selon un autre objet, l'écran d'affichage du terminal de paiement électronique peut être un écran d'affichage classique.

Pour atteindre tout ou partie de ces objets, ainsi que d'autres, un mode de réalisation de la présente invention prévoit un terminal de paiement électronique comprenant un écran d'affichage comprenant des première et deuxième bornes de réception de données d'affichage ; un premier processeur relié à la première borne et adapté à fournir des données d'affichage à la première borne à un premier débit ; et un second processeur relié à la deuxième borne et adapté à fournir des données d'affichage à la deuxième borne à un second débit inférieur au premier débit et adapté à fournir à l'écran d'affichage un signal de sélection des données d'affichage reçues à l'une des première ou deuxième bornes. Le second processeur est, en outre, relié au premier processeur et est adapté à fournir au premier processeur un signal d'autorisation ou d'interdiction de transmission de données d'affichage à l'écran d'affichage.

Selon un mode de réalisation de l'invention, l'écran d'affichage comprend une troisième borne et le second processeur est relié à la troisième borne et est adapté à fournir le signal de sélection à la troisième borne.

Selon un mode de réalisation de l'invention, l'écran d'affichage est un écran à cristaux liquides.

Selon un mode de réalisation de l'invention, le premier processeur est relié à la première borne par une liaison parallèle.

Selon un mode de réalisation de l'invention, le second processeur est relié à la seconde borne par une liaison série.

Selon un mode de réalisation de l'invention, le second processeur est relié à un lecteur de carte à puce et/ou de carte magnétique.

Selon un mode de réalisation de l'invention, le second processeur est relié à un dispositif de détection d'un accès non autorisé au terminal.

Un mode de réalisation de la présente invention prévoit également un procédé d'affichage de données d'affichage sur un écran d'affichage d'un terminal de paiement électronique, ledit écran d'affichage comprenant des première et deuxième bornes de réception de données d'affichage, le terminal comprenant, en outre, un premier processeur relié à la première borne et adapté à fournir des données d'affichage à la première borne à un premier débit et un second processeur relié à la deuxième borne et adapté à fournir des données d'affichage à la deuxième borne à un second débit inférieur au premier débit. Le procédé consiste à amener le second processeur à fournir à l'écran d'affichage un signal de sélection des données d'affichage reçues à l'une des première ou deuxième bornes et à fournir au premier processeur un signal d'autorisation ou d'interdiction de transmission de données d'affichage à l'écran d'affichage.

Selon un mode de réalisation de l'invention, lorsque le second processeur fournit un signal de sélection à l'écran d'affichage des données d'affichage reçues à la première borne, le second processeur transmet un signal au premier processeur l'autorisant à fournir des données d'affichage à l'écran d'affichage. Lorsque le second processeur transmet à l'écran d'affichage un signal de sélection des données d'affichage reçues à la seconde borne, le second processeur fournit au premier processeur un signal lui indiquant de ne pas transmettre de données d'affichage à l'écran d'affichage.

Selon un mode de réalisation de l'invention, l'écran d'affichage comprend un module de commande et un panneau d'affichage, le module de commande étant adapté à afficher sur le panneau d'affichage des images obtenues à partir des données d'affichage. Avant que le second processeur fournisse le signal de sélection à l'écran d'affichage des données d'affichage reçues à la première borne, le second processeur fournit des données de configuration à l'écran d'affichage. Le module de commande est adapté à afficher des images obtenues à partir des données d'affichage reçues à la première borne seulement sur une partie du panneau d'affichage qui dépend des données de configuration.

### Brève description des dessins

Ces objets, caractéristiques et avantages, ainsi que d'autres seront exposés en détail dans la description suivante de modes de réalisation particuliers faite à titre non-limitatif en relation avec les figures jointes parmi lesquelles :
la figure 1 représente, sous la forme d'un schéma par blocs, certains composants d'un terminal de paiement électronique selon un exemple de réalisation de la présente invention ; et
la figure 2 illustre des étapes d'un procédé d'utilisation selon un exemple de réalisation de l'invention du terminal de paiement électronique de la figure 1.

### Description détaillée

Par souci de clarté, de mêmes éléments ont été désignés par de mêmes références aux différentes figures. Dans la suite de la description, on appelle données d'affichage des données transmises à un écran d'affichage et qui permettent l'affichage d'une ou de plusieurs images sur l'écran. On appelle données de configuration des données transmises à un écran d'affichage et qui permettent de définir les paramètres de fonctionnement de l'écran d'affichage pour l'affichage ultérieur d'images (nombre de couleurs, partie de l'écran utilisée pour l'affichage des images, etc.).

Un exemple de réalisation de la présente invention se base sur le fait que la plupart des écrans d'affichage actuellement disponibles dans le commerce comprennent plusieurs bornes d'accès permettant la réception de données (données d'affichage et de configuration), généralement à différents débits. De façon classique, seule l'une des bornes d'accès est utilisée en pratique en fonction des caractéristiques du processeur connecté à l'écran d'affichage. Dans un terminal de paiement électronique, seule la borne d'accès permettant la réception de données à bas débit est utilisée et reliée au processeur de sécurité. Un exemple de réalisation de la présente invention prévoit d'utiliser, en plus du processeur de sécurité, un autre processeur ne réalisant pas des opérations soumises aux contraintes de sécurité propres aux opérations de paiement électronique et adapté à fournir des données d'affichage à un écran d'affichage sur une liaison à haut débit pour permettre l'affichage d'images à haut débit sur l'écran. Pour rester compatible avec les contraintes de sécurité propres au domaine des opérations de paiement électronique, seul le processeur de sécurité peut déterminer quelles données d'affichage doivent être prises en compte par l'écran d'affichage à un instant donné.

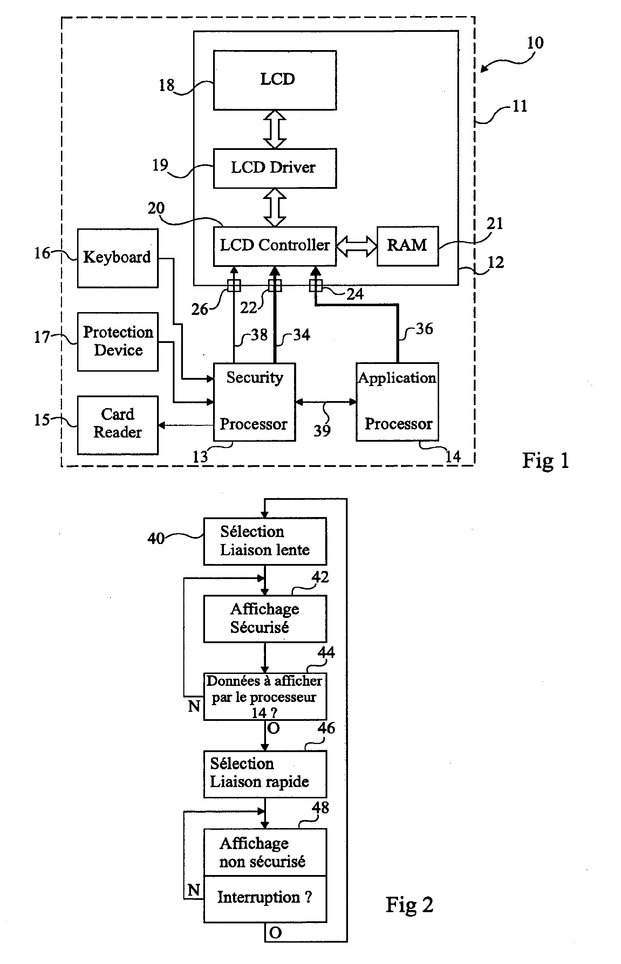

La figure 1 représente, sous la forme d'un schéma par blocs, un terminal de paiement électronique 10 selon un exemple de réalisation de l'invention. Seuls les éléments utiles à la compréhension de l'invention seront décrits. Les éléments qui participent au fonctionnement habituel du terminal de paiement électronique sans intervenir directement dans le cadre de la présente invention ne seront pas décrits.

Le terminal de paiement électronique 10 comprend un boîtier 11 contenant les éléments suivants :
un écran d'affichage 12 ;
un premier processeur 13 (Security Processor), appelé processeur de sécurité, et un second processeur 14 (Application Processor), distinct du premier processeur 13 ;
un lecteur 15 (Card Reader) de carte à puce et/ou de carte magnétique ;
un clavier 16 (Keyboard) ; et
au moins un dispositif de protection 17 (Protection Device) adapté à détecter si un accès non autorisé au boîtier 11 a lieu.

Ces différents éléments peuvent être reliés à un circuit imprimé, non représenté, contenu dans le boîtier 11 et qui assure les connexions électriques entre ces éléments. Le boîtier 11 comprend des ouvertures, non représentées, permettant à un utilisateur de voir les images affichées sur l'écran 12, de manipuler le clavier 16 et d'introduire une carte dans le lecteur 15.

L'écran d'affichage 12 correspond, par exemple, à un écran LCD. A titre d'exemple, l'écran 12 comprend un panneau d'affichage 18 (LCD). Il s'agit, par exemple, d'un panneau constitué de pixels pouvant être sélectionnés par l'intermédiaire d'électrodes d'affichage. L'écran 12 comprend un module d'affichage 19 (LCD Driver) qui commande les électrodes du panneau d'affichage 18. L'écran 12 comprend, en outre, un module de commande 20 (LCD Controller) adapté à échanger des données avec le module d'affichage 19 et avec une mémoire volatile 21 (RAM). L'écran 12 comprend deux bornes d'accès 22, 24 pour la réception de données, notamment des données d'affichage. A titre d'exemple, la borne d'accès 24 est adaptée à recevoir des données à haut débit et la borne d'accès 22 est adaptée à recevoir des données à bas débit. L'écran 12 comprend, en outre, une borne de sélection 26 adaptée à recevoir un signal de sélection. En fonction du signal de sélection reçu à la borne 26, le module de commande 20 utilise les données d'affichage reçues à la borne d'accès 22 ou à la borne d'accès 24. Les données d'affichage reçues peuvent être stockées dans la mémoire 21. Le module de commande 20 est, en outre, adapté à convertir les données d'affichage stockées dans la mémoire 21 et/ou directement reçues à la borne d'accès 22 ou à la borne d'accès 24 en signaux adaptés au module d'affichage 19.

De façon classique, le processeur de sécurité 13 est adapté à commander le fonctionnement du terminal de paiement 10 lors de la réalisation d'une opération de paiement. Un exemple de fonctionnement d'un processeur de sécurité ou cryptoprocesseur est décrit dans la demande de brevet français 07/55148. Le processeur de sécurité 13 est relié à l'écran 12, au clavier 16, au lecteur 15 et au dispositif de protection 17. En particulier, le processeur de sécurité 13 permet l'échange de données sous forme cryptée avec une carte bancaire placée dans le lecteur 15 et permet le stockage de façon sécurisée de données confidentielles. Le dispositif de protection 17 correspond, par exemple, à des touches factices et/ou à un circuit imprimé souple comprenant des pistes en treillis comme cela est décrit dans les demandes de brevet français 06/50617 et 06/54845 déposées au nom de Sagem Monetel. Le dispositif de protection 17 transmet au processeur de sécurité 13 un signal d'alerte lors de la détection d'un accès non autorisé au terminal 10. Le processeur de sécurité 30 peut alors commander l'arrêt du terminal 10 et l'effacement de toutes données confidentielles stockées en mémoire. Le processeur de sécurité 13 est adapté à fournir des données d'affichage et de configuration à l'écran 12 par l'intermédiaire d'une liaison à bas débit 34, par exemple une liaison série, connectée à la borne d'accès 22. Le processeur 14 est adapté à fournir des données d'affichage à l'écran 12 par l'intermédiaire d'une liaison à haut débit 36, par exemple une liaison de type parallèle ou RGB, connectée à la borne d'accès 24. Le processeur 14 n'est pas adapté à fournir des données de configuration à l'écran d'affichage 12.

Le processeur de sécurité 13 est adapté à fournir un signal de sélection à l'écran 12 par l'intermédiaire d'une liaison dédiée 38 connectée à la borne de sélection 26. Le processeur de sécurité 13 est relié au processeur 14 par une liaison 39 d'échange de données.

La liaison 34 permet un transfert de données à bas débit entre le processeur de sécurité 13 et le module de commande 20, par exemple de l'ordre de 10 Mbit/s. Ceci ne permet principalement que l'affichage sur le panneau 18 d'images fixes, par exemple des messages correspondant à des suites de caractères alphanumériques. La liaison 36 permet le transfert de données à haut débit entre le processeur 14 et le module de commande 20, par exemple de l'ordre de 100 Mbit/s. Ceci permet l'affichage de vidéos sur le panneau d'affichage 18. Il s'agit, par exemple, de vidéos à caractère commercial ou publicitaire.

La figure 2 représente un procédé de fonctionnement du terminal 10 de la figure 1 selon un exemple de réalisation de la présente invention. Le procédé débute à l'étape 40 à laquelle le processeur de sécurité 13 transmet au module de commande 20 un signal de sélection par l'intermédiaire de la liaison 38 par lequel il commande le module 20 pour que celui-ci ne prenne en compte que les données (données d'affichage et/ou données de configuration) reçues à la borne d'accès 22. De ce fait, le module de commande 20 ne prend pas en compte les données d'affichage qui seraient reçues à la borne d'accès 24. Le procédé se poursuit à l'étape 42.

A l'étape 42, si des messages doivent être affichés sur l'écran 12 par le processeur de sécurité 13, le processeur de sécurité 13 transmet au module de commande 20 des données d'affichage par l'intermédiaire de la liaison 34. Ces données, éventuellement stockées dans la mémoire 21, sont converties en signaux adaptés au module d'affichage 20 qui commande, en conséquence, le panneau d'affichage 18. Comme le processeur de sécurité 13 est conçu pour respecter les différentes contraintes de sécurité propres au domaine des opérations de paiement électronique, les données d'affichage fournies à l'écran 12 sont des données qui satisfont à ces contraintes de sécurité. Lorsque l'étape d'affichage de données par le processeur de sécurité 13 est achevée, et que le processeur de sécurité 13 n'a plus de nouvelles données à afficher, le procédé se poursuit à l'étape 44.

A l'étape 44, le processeur de sécurité 13 détermine s'il a reçu une requête d'affichage émise par le processeur 14 par la liaison 39. Dans la négative, le procédé se poursuit à l'étape 42 à laquelle le processeur de sécurité 13 peut à nouveau transmettre des données d'affichage à l'écran 12. Si, à l'étape 44, le processeur de sécurité 13 reçoit une requête d'affichage émise par le processeur 14, le procédé se poursuit à l'étape 46.

A l'étape 46, le processeur de sécurité 13 transmet au module de commande 20 un signal de sélection par l'intermédiaire de la liaison 38 par lequel il commande le module 20 pour que celui-ci ne prenne en compte que les données reçues à la borne d'accès 24. De ce fait, le module de commande 20 ne prend pas en compte les données d'affichage qui seraient reçues à la borne d'accès 22. En outre, le processeur de sécurité 13 transmet un signal au processeur 14 par la liaison 39 lui donnant l'autorisation de fournir des données d'affichage au module de commande 20. Le procédé se poursuit à l'étape 48.

A l'étape 48, le processeur 14 fournit au module de commande 20 des données d'affichage par la liaison 36. Les données d'affichage, éventuellement stockées dans la mémoire 21, sont converties par le module de commande 20 pour fournir des signaux adaptés au module d'affichage 19 qui commande l'affichage de ces données sur le panneau d'affichage 18.

A l'étape 48, tant que le processeur de sécurité 13 n'a pas besoin d'afficher des données, le processeur 14 peut continuer à transmettre des données d'affichage à l'écran 12. Dès que le processeur de sécurité 13 a besoin de transmettre des données (données d'affichage ou de configuration) à l'écran 12, il transmet un message au processeur 14 par l'intermédiaire de la liaison 39 lui indiquant d'interrompre la transmission de données d'affichage à l'écran 12. Le processeur 14 cesse alors de transmettre des données d'affichage sur la liaison 36. Le procédé se poursuit alors à l'étape 40 à laquelle le processeur de sécurité 13, comme cela a été décrit précédemment, transmet au module de commande 20 un signal de sélection par l'intermédiaire de la liaison 38 par lequel il commande le module 20 pour que celui-ci ne prenne en compte que les données reçues à la borne d'accès 22.

Selon un autre exemple de réalisation, à l'étape 48, la totalité du panneau d'affichage 18 n'est pas attribuée au processeur 14, une partie du panneau d'affichage 18 restant en permanence attribuée au processeur de sécurité 13. Dans ce cas, à l'étape 46, avant que le processeur de sécurité 13 ne transmette au module de commande 20 un signal de sélection par lequel il commande le module 20 pour que celui-ci ne prenne en compte que les données d'affichage reçues à la borne d'accès 24, le processeur 13 transmet au module de commande 20, par l'intermédiaire de la borne 22, des données de configuration qui définissent la partie du panneau d'affichage 18 dans laquelle les données d'affichage fournies par le processeur 14 seront affichées à l'étape 48. Le processeur 13 peut, en outre, transmettre des données d'affichage au module de commande 20 pour afficher, dans la partie du panneau d'affichage 18 qui n'est pas attribuée au processeur 14, un message indiquant que les données qui seront affichées sur le reste du panneau 18 à l'étape 48 ne seront pas affichées dans le cadre d'une opération de paiement sécurisée. Ce message reste alors affiché sur l'écran 12 tout au long de l'étape 48 pendant laquelle le microprocesseur 14 transmet au module de commande 20 par la borne 24 des données d'affichage qui conduisent à l'affichage d'images dans la partie du panneau 18 attribuée au processeur 14.

Le présent exemple de réalisation de l'invention permet de profiter de l'ensemble des possibilités d'affichage offertes par l'écran 12. En effet, le processeur de sécurité 13 étant dédié à la réalisation d'opérations de paiement électronique, il permet seulement l'affichage de messages simples sur le panneau d'affichage 18. La conception du processeur 14 n'étant pas soumise aux contraintes de sécurité propres à la réalisation d'opérations de paiement électronique, il peut, de façon simple, commander l'affichage d'images ou de vidéos en profitant des possibilités offertes par l'écran 12. Le présent exemple de réalisation de l'invention permet donc d'optimiser l'utilisation de l'écran 12 tout en réduisant le plus possible les modifications à apporter au processeur de sécurité 13. En outre, le présent exemple de réalisation permet d'optimiser l'utilisation de l'écran 12 du terminal de paiement électronique 10, puisque, lorsque l'écran 12 n'est pas utilisé par le processeur de sécurité 13, il peut être utilisé à d'autres fins par le processeur 14. De plus, comme la sélection des données à afficher est réalisée exclusivement par le processeur de sécurité 13, par l'intermédiaire du signal de sélection transmis au module de commande 20, la sécurité du fonctionnement du terminal de paiement électronique n'est pas modifiée.

Des modes de réalisation particuliers de la présente invention ont été décrits. Diverses variantes et modifications apparaîtront à l'homme de l'art. En particulier, l'écran 12 peut avoir une structure différente de celle décrite précédemment.

## Revendications

1. Terminal de paiement électronique (10) comprenant :
un écran d'affichage (12) comprenant des première et deuxième bornes (22, 24) de réception de données d'affichage ;
un premier processeur (14) relié à la première borne (24) et adapté à fournir des données d'affichage à la première borne à un premier débit ; et
un second processeur (13) relié à la deuxième borne (22) et adapté à fournir des données d'affichage à la deuxième borne à un second débit inférieur au premier débit et adapté à fournir à l'écran d'affichage un signal de sélection des données d'affichage reçues à l'une des première ou deuxième bornes, le second processeur (13) étant, en outre, relié au premier processeur (14) et étant adapté à fournir au premier processeur un signal d'autorisation ou d'interdiction de transmission de données d'affichage à l'écran d'affichage (12).

2. Terminal selon la revendication 1, dans lequel l'écran d'affichage (12) comprend une troisième borne (26) et dans lequel le second processeur (13) est relié à la troisième borne et est adapté à fournir le signal de sélection à la troisième borne.

3. Terminal selon la revendication 1 ou 2, dans lequel l'écran d'affichage (12) est un écran à cristaux liquides.

4. Terminal selon l'une quelconque des revendications 1 à 3, dans lequel le premier processeur (14) est relié à la première borne (24) par une liaison parallèle (36).

5. Terminal selon l'une quelconque des revendications 1 à 4, dans lequel le second processeur (13) est relié à la seconde borne (22) par une liaison série (34).

6. Terminal selon l'une quelconque des revendications 1 à 5, dans lequel le second processeur (13) est relié à un lecteur (15) de carte à puce et/ou de carte magnétique.

7. Terminal selon l'une quelconque des revendications 1 à 6, dans lequel le second processeur (13) est relié à un dispositif (17) de détection d'un accès non autorisé au terminal.

8. Procédé d'affichage de données d'affichage sur un écran d'affichage (12) d'un terminal de paiement électronique (10), ledit écran d'affichage comprenant des première et deuxième bornes (22, 24) de réception de données d'affichage, le terminal comprenant, en outre, un premier processeur (14) relié à la première borne (24) et adapté à fournir des données d'affichage à la première borne à un premier débit et un second processeur (13) relié à la deuxième borne (22) et adapté à fournir des données d'affichage à la deuxième borne à un second débit inférieur au premier débit, le procédé consistant à amener le second processeur à fournir à l'écran d'affichage un signal de sélection des données d'affichage reçues à l'une des première ou deuxième bornes et à fournir au premier processeur un signal d'autorisation ou d'interdiction de transmission de données d'affichage à l'écran d'affichage.

9. Procédé selon la revendication 8, dans lequel lorsque le second processeur (13) fournit un signal de sélection à l'écran d'affichage (12) des données d'affichage reçues à la première borne (24), le second processeur transmet un signal au premier processeur (14) l'autorisant à fournir des données d'affichage à l'écran d'affichage et dans lequel, lorsque le second processeur (13) transmet à l'écran d'affichage (12) un signal de sélection des données d'affichage reçues à la seconde borne (22), le second processeur fournit au premier processeur un signal lui indiquant de ne pas transmettre de données d'affichage à l'écran d'affichage.

10. Procédé selon la revendication 9, dans lequel l'écran d'affichage (12) comprend un module de commande (20) et un panneau d'affichage (18), le module de commande étant adapté à afficher sur le panneau d'affichage des images obtenues à partir des données d'affichage et dans lequel, avant que le second processeur (13) fournisse le signal de sélection à l'écran d'affichage (12) des données d'affichage reçues à la première borne (24), le second processeur fournit des données de configuration à l'écran d'affichage, le module de commande étant adapté à afficher des images obtenues à partir des données d'affichage reçues à la première borne seulement sur une partie du panneau d'affichage qui dépend des données de configuration.

## Patentansprüche

1. Eine elektronische Zahlungseinheit (10), die folgendes aufweist:
eine Anzeige (12) mit ersten und zweiten Anschlüssen (22, 24) zum Empfang von Anzeigedaten;
einen ersten Prozessor (14) verbunden mit dem ersten Anschluss (24) und geeignet um Anzeigedaten an den ersten Anschluss mit einer ersten Rate zu liefern; und
einen zweiten Prozessor (13) verbunden mit dem zweiten Anschluss (22) und geeignet zur Lieferung von Anzeigedaten an den zweiten Anschluss mit einer zweiten Rate, die niedriger ist als die erste Rate und geeignet um die Anzeige mit einem Auswahlsignal der Anzeigedaten empfangen auf einem der ersten oder zweiten Anschlüsse vorzusehen, wobei der zweite Prozessor (13) ferner mit dem ersten Prozessor (14) verbunden ist und geeignet ist, um an den ersten Prozessor ein Signal zu liefern, um die Übertragung von Anzeigedaten an die Anzeige (12) zu gestatten oder zu verbieten.

2. Die Einheit nach Anspruch 1, wobei die Anzeige (12) einen dritten Anschluss (26) aufweist, und wobei der zweite Prozessor (13) mit dem dritten Anschluss verbunden ist und geeignet ist, um das Auswahlsignal an den dritten Anschluss zu liefern.

3. Die Einheit nach Anspruch 1 oder 2, wobei die Anzeige (12) eine Flüssigkristallanzeige ist.

4. Die Einheit nach einem der Ansprüche 1 bis 3, wobei der erste Prozessor (14) mit dem ersten Anschluss (24) durch eine Parallelverbindung bzw. einen Parallel-Link (36) verbunden ist.

5. Die Einheit nach einem der Ansprüche 1 bis 4, wobei der zweite Prozessor (13) mit dem zweiten Anschluss (22) durch eine Serienverbindung bzw. einen Serien-Link (34) verbunden ist.

6. Die Einheit nach einem der Ansprüche 1 bis 5, wobei der zweite Prozessor (13) mit einem Chip-Karten- und/oder Magnetkarten-Leser verbunden ist.

7. Die Einheit nach einem der Ansprüche 1 bis 6, wobei der zweite Prozessor (13) mit einer Vorrichtung (17) zum Detektieren eines nicht-autorisierten Zugriffs zu der Einheit verbunden ist.

8. Ein Verfahren zur Anzeige von Anzeigedaten auf einer Anzeige (12) einer elektronischen Zahlungseinheit (10), wobei die erwähnte Anzeige erste und zweite Anschlüsse (22, 24) aufweist, um Anzeigedaten zu empfangen, wobei die Zahlungseinheit ferner folgendes aufweist: einen ersten Prozessor (14) verbunden mit dem ersten Anschluss (24) und geeignet zur Lieferung von Anzeigedaten an den ersten Anschluss mit einer ersten Rate und einen zweiten Prozessor (13) verbunden mit dem zweiten Anschluss (22) und geeignet zur Lieferung von Anzeigedaten an den zweiten Anschluss mit einer zweiten Rate, die niedriger ist als die erste Rate, wobei das Verfahren folgendes aufweist: Vorsehen, dass der zweite Prozessor die Anzeige mit einem Signal zur Auswahl der Anzeigedaten empfangen an einem der ersten oder zweiten Anschlüsse vorsieht und Liefern an den ersten Prozessor ein Signal, um die Übertragung von Anzeigedaten an die Anzeige zu gestatten oder zu verbieten.

9. Das Verfahren nach Anspruch 8, wobei dann, wenn der zweite Prozessor (13) an die Anzeige (12) ein Signal liefert zur Auswahl der Anzeigedaten empfangen an dem ersten Anschluss (24), der zweite Prozessor ein Signal an den ersten Prozessor (14) sendet, um diesen zu gestatten die Anzeigedaten an die Anzeige zu liefern und wobei dann, wenn der zweite Prozessor (13) an die Anzeige (12) ein Signal überträgt zur Auswahl der Anzeigedaten empfangen an dem zweiten Anschluss (22), der zweite Prozessor an den ersten Prozessor ein Signal liefert, um diesen zu informieren, keine Anzeigedaten an die Anzeige zu senden.

10. Verfahren nach Anspruch 9, wobei die Anzeige (12) eine Steuereinheit (20) und eine Anzeigetafel (18) aufweist, wobei die Steuereinheit geeignet ist, um auf der Anzeigetafel Bilder anzuzeigen, die erhalten wurden, basierend auf den Anzeigedaten und wobei bevor der zweite Prozessor (13) die Anzeige (12) mit dem Signal zur Auswahl der Anzeigedaten empfangen am ersten Prozessor (24) beliefert, der zweite Prozessor Konfigurationsdaten an die Anzeige liefert, wobei die Steuereinheit geeignet ist, die Bilder anzuzeigen, die erhalten wurden, basierend auf den am ersten Anschluss empfangenen Anzeigedaten und zwar nur auf einem Teil der Anzeigetafel abhängig von den Konfigurationsdaten.

## Claims

1. An electronic payment unit (10) comprising:
a display (12) having first and second terminals (22, 24) for receiving display data;
a first processor (14) connected to the first terminal (24) and adapted to provide display data to the first terminal at a first rate; and
a second processor (13) connected to the second terminal (22) and adapted to provide display data to the second terminal at a second rate lower than the first rate and adapted to provide the display with a signal of selection of the display data received on one of the first or second terminals, the second processor (13) being further connected to the first processor (14) and being adapted to provide the first processor with a signal for allowing or forbidding the transmission of display data to the display (12).

2. The unit of claim 1, wherein the display (12) comprises a third terminal (26) and wherein the second processor (13) is connected to the third terminal and is adapted to provide the selection signal to the third terminal.

3. The unit of claim 1 or 2, wherein the display (12) is a liquid crystal display.

4. The unit of any of claims 1 to 3, wherein the first processor (14) is connected to the first terminal (24) by a parallel link (36).

5. The unit of any of claims 1 to 4, wherein the second processor (13) is connected to the second terminal (22) by a serial link (34).

6. The unit of any of claims 1 to 5, wherein the second processor (13) is connected to a chip card and/or magnetic card reader (15).

7. The unit of any of claims 1 to 6, wherein the second processor (13) is connected to a device (17) for detecting an unauthorized access to the unit.

8. A method for displaying display data on a display (12) of an electronic payment unit (10), said display comprising first and second terminals (22, 24) for receiving display data, the payment unit further comprising a first processor (14) connected to the first terminal (24) and adapted to provide display data to the first terminal at a first rate and a second processor (13) connected to the second terminal (22) and adapted to provide display data to the second terminal at a second rate lower than the first rate, the method comprising having the second processor provide the display with a signal for selecting display data received on one of the first or second terminals and providing the first processor with a signal for allowing or forbidding the transmission of display data to the display.

9. The method of claim 8, wherein when the second processor (13) provides the display (12) with a signal for selection the display data received on the first terminal (24), the second processor transmits a signal to the first processor (14) allowing it to provide display data to the display and wherein, when the second processor (13) transmits to the display (12) a signal for selecting the display data received on the second terminal (22), the second processor provides the first processor with a signal notifying it not to transmit display data to the display.

10. The method of claim 9, wherein the display (12) comprises a control unit (20) and a display panel (18), the control unit being adapted to display on the display panel images obtained based on the display data and wherein, before the second processor (13) provide the display (12) with the signal for selecting the display data received on the first terminal (24), the second processor provides configuration data to the display, the control unit being adapted to display images obtained based on the display data received on the first terminal on a portion only of the display panel which depends on the configuration data.
